(19) Europäisches Patentamt
European Patent Office
Office européen des brevets

(11) EP 3 752 548 B1

(12) # EUROPÄISCHE PATENTSCHRIFT

(45) Veröffentlichungstag und Bekanntmachung des Hinweises auf die Patenterteilung:
**12.01.2022 Patentblatt 2022/02**

(21) Anmeldenummer: **19703384.8**

(22) Anmeldetag: **13.02.2019**

(51) Int Cl.:
***C08G 64/34*** *(2006.01)*

(86) Internationale Anmeldenummer:
**PCT/EP2019/053556**

(87) Internationale Veröffentlichungsnummer:
**WO 2019/158592 (22.08.2019 Gazette 2019/34)**

(54) **VERFAHREN ZUR HERSTELLUNG VON POLYETHERCARBONATPOLYOLEN**

METHOD FOR MANUFACTURING POLYETHER CARBONATE POLYOLS

PROCÉDÉ DE PRODUCTION DE POLYÉTHERCARBONATE POLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2018 EP 18157272**

(43) Veröffentlichungstag der Anmeldung:
**23.12.2020 Patentblatt 2020/52**

(73) Patentinhaber: **Covestro Intellectual Property GmbH & Co. KG**
**51373 Leverkusen (DE)**

(72) Erfinder:
- **HOFMANN, Jörg**
  **47800 Krefeld (DE)**
- **BRAUN, Stefanie**
  **51069 Köln (DE)**
- **TRAVING, Michael**
  **51399 Burscheid (DE)**

(74) Vertreter: **Levpat**
**c/o Covestro AG**
**Gebäude 4825**
**51365 Leverkusen (DE)**

(56) Entgegenhaltungen:
**WO-A1-2014/033071**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 752 548 B1

## Beschreibung

Die vorliegende Erfindung betrifft ein Verfahren zur Herstellung von Polyethercarbonatpolyolen durch Anlagerung von Alkylenoxid und Kohlendioxid ($CO_2$) an eine H-funktionelle Startersubstanz.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

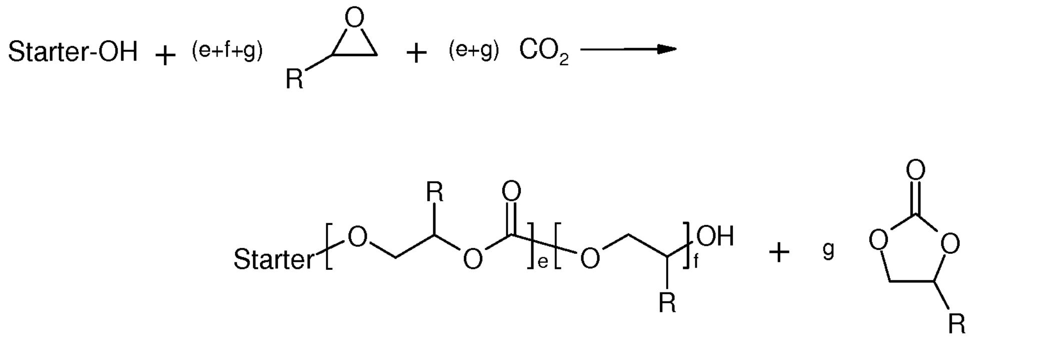

(I)

Die Patentschrift EP 3 060 596 B1 offenbart ein Verfahren zur Herstellung von Polyethercarbonatpolyolen durch Anlagerung von Alkylenoxiden und Kohlendioxid an eine oder mehrere H-funktionelle Startersubstanz(en) in Gegenwart eines Doppelmetallcyanid-Katalysators, oder in Gegenwart eines Metallkomplexkatalysators auf Basis der Metalle Zink und/oder Cobalt, dadurch gekennzeichnet, dass eine oder mehrere H-funktionelle Startersubstanz(en) während der Reaktion kontinuierlich in den Reaktor zudosiert werden. EP 3 060 596 B1 offenbart zudem, dass dabei die kontinuierlich zudosierte Startersubstanz (z.B. Glycerin) mit größeren Mengen Phosphorsäure versetzt werden kann.

WO 2014/033071 A1 beschreibt ein Verfahren zur DMC-katalysierten Herstellung von Polyethercarbonatpolyolen, bei dem im Reaktor ein Suspensionsmittel, das keine H-funktionellen Gruppen aufweist, vorgelegt wird und bei dem niedermolekulare H-funktionelle Startersubstanzen während der Reaktion kontinuierlich in den Reaktor zudosiert werden. Im Vergleich zu einem entsprechenden Verfahren, bei dem eine Verbindung mit H-funktionellen Gruppen (z.B. Polyetherpolyol oder Polyethercarbonatpolyol) im Reaktor vorgelegt wird, wird eine verbesserte Selektivität (Verhältnis cyclisches / lineares Carbonat) erzielt.

Es war daher Aufgabe der vorliegenden Erfindung, ein Verfahren zur Herstellung von Polyethercarbonatpolyolen bereitzustellen, bei dem eine H-funktionelle Startersubstanz vorgelegt und eine günstige Selektivität erreicht wird.

Überraschend wurde gefunden, dass die erfindungsgemäße Aufgabe gelöst wird durch ein Verfahren zur Herstellung von Polyethercarbonatpolyolen durch Anlagerung von Alkylenoxid und Kohlendioxid an eine H-funktionelle Startersubstanz, dadurch gekennzeichnet, dass

($\alpha$) eine Teilmenge H-funktioneller Startersubstanz in einem Reaktor gegebenenfalls gemeinsam mit DMC-Katalysator vorgelegt wird,

($\gamma$) eine H-funktionelle Startersubstanz und ein Suspensionsmittel, das keine H-funktionelle Gruppen aufweist, während der Reaktion kontinuierlich in den Reaktor zudosiert werden.

Die erfindungsgemäß eingesetzten Suspensionsmittel enthalten keine H-funktionelle Gruppen. Als Suspensionsmittel, das keine H-funktionelle Gruppen aufweist, sind alle polar-aprotischen, schwach polar-aprotischen und unpolar-aprotischen Lösungsmittel geeignet, die jeweils keine H-funktionelle Gruppen enthalten. Als Suspensionsmittel, das keine H-funktionelle Gruppen aufweist, können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im

Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel, das keine H-funktionelle Gruppen aufweist, werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Bevorzugt wird in Schritt (γ) 2 Gew.-% bis 20 Gew.-%, besonders bevorzugt 5 Gew.-% bis 15 Gew.-% und insbesondere bevorzugt 7 Gew.-% bis 11 Gew.-% des Suspensionsmittels, das keine H-funktionelle Gruppen aufweist, zudosiert, bezogen auf die Summe der in Schritt (γ) zudosierten Komponenten.

In einer bevorzugten Ausführungsform betrifft die Erfindung ein Verfahren zur Herstellung von Polyethercarbonatpolyolen durch Anlagerung von Alkylenoxid und Kohlendioxid an eine H-funktionelle Startersubstanz, dadurch gekennzeichnet, dass

(α) eine Teilmenge H-funktioneller Startersubstanz in einem Reaktor gegebenenfalls gemeinsam mit DMC-Katalysator vorgelegt wird,

(β) gegebenenfalls zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) eine H-funktionelle Startersubstanz und ein Suspensionsmittel, das keine H-funktionelle Gruppen aufweist, während der Reaktion kontinuierlich in den Reaktor zudosiert werden,

(δ) gegebenenfalls das in Schritt (γ) kontinuierlich entfernte Reaktionsgemisch in einen Nachreaktor überführt wird, in dem im Wege einer Nachreaktion der Gehalt an freiem Alkylenoxid im Reaktionsgemisch reduziert wird.

Zu Schritt (α):

Die in Schritt (α) eingesetzte Teilmenge der H-funktionellen Startersubstanz kann Komponente K enthalten, beispielsweise in einer Menge von mindestens 100 ppm, bevorzugt von 100 bis 10000 ppm.

Bei dem erfindungsgemäßen Verfahren kann zunächst eine Teilmenge H-funktioneller Startersubstanz im Reaktor vorgelegt werden. Anschließend wird gegebenenfalls die für die Polyaddition benötigte Menge an DMC-Katalysator in den Reaktor gegeben. Die Reihenfolge der Zugabe ist dabei nicht entscheidend. Es kann auch erst der DMC-Katalysator und anschließend eine Teilmenge H-funktioneller Startersubstanz in den Reaktor gefüllt werden. Alternativ kann auch erst der DMC-Katalysator in einer Teilmenge H-funktioneller Startersubstanz suspendiert und anschließend die Suspension in den Reaktor gefüllt werden.

In einer bevorzugten Ausführungsform der Erfindung wird in Schritt (α) eine H-funktionelle Startersubstanz im Reaktor gegebenenfalls gemeinsam mit DMC-Katalysator vorgelegt, und dabei wird kein Suspensionsmittel, das keine H-funktionelle Gruppen enthält, im Reaktor vorgelegt.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt

In einer bevorzugten Ausführungsform wird in das resultierende Gemisch (i) aus einer Teilmenge H-funktioneller Startersubstanz und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch (i) aus einer Teilmenge H-funktioneller Startersubstanz und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) eine Teilmenge H-funktioneller Startersubstanz vorgelegt und
(α-II) die Temperatur der Teilmenge H-funktioneller Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zur Teilmenge H-funktioneller Startersubstanz in Schritt (α-I) oder unmittelbar anschließend in Schritt (α-II) zugesetzt wird.

<u>Zu Schritt (β):</u>

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. In diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung des Alkylenoxids (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge des Alkylenoxids 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an H-funktioneller Startersubstanz). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

<u>Zu Schritt (γ):</u>

Die Dosierung H-funktioneller Startersubstanz, des Suspensionsmittels, das keine H-funktionelle Gruppen aufweist, des Alkylenoxids und gegebenenfalls auch des Kohlendioxids kann simultan oder sequentiell (portionsweise) erfolgen, beispielsweise kann die gesamte Kohlendioxidmenge, die Menge an H-funktioneller Startersubstanz, des Suspensionsmittels, das keine H-funktionelle Gruppen aufweist, und/oder die in Schritt (γ) dosierte Menge an Alkylenoxid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids, des Suspensionsmittels, das keine H-funktionelle Gruppen aufweist, und/oder H-funktioneller Startersubstanz den $CO_2$-Druck allmählich oder schrittweise zu steigern oder zu

senken oder gleich zu lassen. Vorzugsweise wird der Gesamtdruck während der Reaktion durch eine Nachdosierung an Kohlendioxid konstant gehalten. Die Dosierung des Alkylenoxids, des Suspensionsmittels, das keine H-funktionelle Gruppen aufweist, und/oder H-funktioneller Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide, der Suspensionsmittel, die keine H-funktionelle Gruppen aufweisen, bzw. der H-funktionellen Startersubstanzen kann simultan oder sequentiell über jeweils separate Dosierungen (Zugaben) erfolgen oder über eine oder mehrere Dosierungen, wobei die Alkylenoxide, die Suspensionsmittel, die keine H-funktionelle Gruppen aufweisen, bzw. die H-funktionellen Startersubstanzen einzeln oder als Gemisch dosiert werden können. Über die Art und/oder Reihenfolge der Dosierung der H-funktionellen Startersubstanzen, der Alkylenoxide, der Suspensionsmittel, die keine H-funktionelle Gruppen aufweisen, und/oder des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell das Alkylenoxid verbraucht wird und ob das Produkt gegebenenfalls $CO_2$-freie Polyether-Blöcke enthalten soll. Die Menge des Kohlendioxids (angegeben als Druck) kann bei der Zugabe des Alkylenoxids ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Für das erfindungsgemäße Verfahren hat sich weiterhin gezeigt, dass die Copolymerisation (Schritt ($\gamma$)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an.

Die Dosierung des Alkylenoxids, H-funktioneller Startersubstanz, des Suspensionsmittels, das keine H-funktionelle Gruppen aufweist, und des DMC-Katalysators kann über separate oder gemeinsame Dosierstellen erfolgen. In einer bevorzugten Ausführungsform werden Alkylenoxid, Suspensionsmittel, das keine H-funktionelle Gruppen aufweist, und H-funktionelle Startersubstanz über separate Dosierstellen kontinuierlich dem Reaktionsgemisch zugeführt. Diese Zugabe H-funktioneller Startersubstanz und des Suspensionsmittels, das keine H-funktionelle Gruppen aufweist, kann als kontinuierliche Zudosierung in den Reaktor oder portionsweise erfolgen.

Die Schritte ($\alpha$), ($\beta$) und ($\gamma$) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt $\beta$) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt $\gamma$) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten ($\alpha$) und ($\beta$) resultierende aktivierten DMC-Katalysator enthaltende Mischung in demselben Reaktor weiter mit Alkylenoxid, H-funktioneller Startersubstanz, Suspensionsmittel, das keine H-funktionelle Gruppen aufweist, und Kohlendioxid umgesetzt. In einer weiteren bevorzugten Ausführungsform wird die gemäß den Schritten ($\alpha$) und ($\beta$) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxid, H-funktioneller Startersubstanz, Suspensionsmittel, das keine H-funktionelle Gruppen aufweist, und Kohlendioxid umgesetzt.

Bei Reaktionsführung in einem Rohrreaktor werden die gemäß den Schritten ($\alpha$) und ($\beta$) resultierende aktivierten DMC-Katalysator enthaltende Mischung, H-funktionelle Startersubstanz, Alkylenoxid, Suspensionsmittel, das keine H-funktionelle Gruppen aufweist, und Kohlendioxid kontinuierlich durch ein Rohr gepumpt. Die molaren Verhältnisse der

Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe H-funktioneller Startersubstanz und Suspensionsmittel, das keine H-funktionelle Gruppen aufweist, umfasst.

Gegenstand der Erfindung ist daher auch ein Verfahren, wobei in Schritt (γ) H-funktionelle Startersubstanz, Alkylenoxid, Suspensionsmittel, das keine H-funktionelle Gruppen aufweist, sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyethercarbonatpolyole eine DMC-Katalysator-enthaltende Mischung hergestellt, dann werden gemäß Schritt (γ)

(γ1) jeweils eine Teilmenge H-funktioneller Startersubstanz, Alkylenoxid und Kohlendioxid zudosiert zum Initiieren der Copolymerisation, und

(γ2) während des Fortschreitens der Copolymerisation jeweils die verbleibende Menge an DMC-Katalysator, H-funktioneller Startersubstanz, Suspensionsmittel, das keine H-funktionelle Gruppen aufweist, und Alkylenoxid in Gegenwart von Kohlendioxid kontinuierlich zudosiert,

wobei gleichzeitig resultierendes Reaktionsgemisch kontinuierlich aus dem Reaktor entfernt wird.

In Schritt (γ) wird der DMC-Katalysator bevorzugt suspendiert in H-funktioneller Startersubstanz zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen können eine kontinuierliche Zugabe H-funktioneller Startersubstanz und eine kontinuierliche Zugabe des Suspensionsmittels, das keine H-funktionellen Gruppen aufweist, echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass H-funktionelle Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

<u>Schritt (δ)</u>

Gegebenenfalls kann in einem Schritt (δ) das Reaktionsgemisch in Schritt (γ) in einen Nachreaktor überführt werden, in dem im Wege einer Nachreaktion der Gehalt an freiem Alkylenoxid im Reaktionsgemisch reduziert wird. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Alkylenoxid

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxid Ethylenoxid und/oder Propylenoxid, insbesondere Propylenoxid eingesetzt. In dem erfindungsgemäßen Verfahren kann als Alkylenoxid auch eine Mischung von Alkylenoxiden eingesetzt werden.

H-funktionelle Startersubstanz

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 2 oder 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

In einer besonders bevorzugten Ausführungsform ist in Schritt (α) die Teilmenge H-funktioneller Startersubstanz ausgewählt aus mindestens einer Verbindung der Gruppe bestehend aus Polyethercarbonatpolyolen mit einem Molekulargewicht $M_n$ im Bereich von 150 bis 8000 g/mol bei einer Funktionalität von 2 bis 3 und Polyetherpolyolen mit einem Molekulargewicht $M_n$ im Bereich von 150 bis 8000 g/mol und einer Funktionalität von 2 bis 3. In einer weiteren besonders bevorzugten Ausführungsform ist die H-funktionelle Startersubstanz in Schritt (γ) ausgewählt aus mindestens einer Verbindung der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol.

Die Herstellung der Polyethercarbonatpolyole erfolgt durch katalytische Anlagerung von Kohlendioxid und Alkylenoxiden an H-funktionelle Startersubstanz. Unter "H-funktionell" wird im Sinne der Erfindung die Anzahl an für die Alkoxylierung aktiven H-Atomen pro Molekül der Startersubstanz verstanden.

Die H-funktionelle Startersubstanz, die während der Reaktion kontinuierlich in den Reaktor zudosiert wird, kann Komponenten K enthalten.

Komponente K

Als Komponente K geeignete Verbindungen sind dadurch gekennzeichnet, dass sie mindestens eine Phosphor-Sauerstoff-Bindung enthalten. Als Komponente K geeignet sind beispielsweise Phosphorsäure sowie Phosphorsäuresalze, Phosporsäurehalogenide, Phosphorsäureamide, Phosphorsäureester und Salze der Mono- und Diester der Phosphorsäure.

Unter den unter Komponente K zuvor und nachfolgend genannten Estern werden im Sinne der Erfindung jeweils die Alkylester, Arylester und/oder Alkarylester-Derivate verstanden.

Als Phosphorsäureester sind beispielsweise geeignet Mono-, Di- oder Triester von Phosphorsäure, Mono-, Di-, Tri- oder Tetraester von Pyrophosphorsäure und Mono-, Di-, Tri-, Tetra- oder Polyester von Polyphosphorsäure und Alkoholen mit 1 bis 30 C-Atomen. Als Komponente K sind beispielsweise die folgenden Verbindungen geeignet: Phosphorsäuretriethylester, Phosphorsäurediethylester, Phosphorsäuremonoethylester, Phosphorsäuretripropylester, Phosphorsäuredipropylester, Phosphorsäuremonopropylester, Phosphorsäuretributylester, Phosphorsäuredibutylester, Phosphorsäuremonobutylester, Phosphorsäuretrioctylester, Phosphorsäuretris(2-ethylhexyl)ester, Phosphorsäuretris-(2-butoxyethyl)ester, Phosphorsäurediphenylester, Phosphorsäuredikresylester, Fructose-1,6-bisphosphat, Glucose-1-phosphat, Phosphorsäure-bis-(dimethylamid)-chlorid, Phosphorsäure-bis-(4-nitrophenyl)-ester, Phosphorsäurecyclopropylmethyl-diethyl-ester, Phosphorsäure-dibenzylester, Phosphorsäure-diethyl-3-butenylester, Phosphorsäuredihexadecylester, Phosphorsäure-diisopropylester-chlorid, Phosphorsäure-diphenylester, Phosphorsäure-diphenylester-chlorid, Phosphorsäure-2-hydroxyethylmethacrylatester, Phosphorsäure-mono-(4-chlorphenylester)-dichlorid, Phosphorsäure-mono-(4-nitrophenylester)-dichlorid, Phosphorsäure-monophenylester-dichlorid, Phosphorsäuretridecylester, Phosphorsäure-trikresylester, Phosphorsäure-trimethylester, Phosphorsäuretriphenylester, Phosphorsäuretripyrolidid, Phosphorsulfochlorid, Phosphorsäure-dichloriddimethylamid, Phosphorsäuredichlorid-methylester, Phosphorylbromid, Phosphorylchlorid, Phosphorylchinolinchlorid Calciumsalz und O-Phosphorylethanolamin, Alkali- und Ammoniumdihydrogenphosphate, Alkali-, Erdalkali- und Ammoniumhydrogenphosphate, Alkali-, Erdalkali- und Ammoniumphosphate.

Unter Ester der Phosphorsäure (Phosphorsäureester) werden auch die durch Propoxylierung der Phosphorsäure erhältlichen Produkte verstanden (bspw. erhältlich als Exolit® OP 560).

Als Komponente K geeignet sind auch Phosphonsäure und Phosphorige Säure sowie Mono- und Diester der Phosphonsäure sowie Mono-, Di- und Triester der Phosphorigen Säure sowie jeweils deren Salze, Halogenide und Amide.

Als Phosphonsäureester sind beispielsweise geeignet Mono- oder Diester von Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren und Cyanphosphonsäuren oder Mono-, Di-, Tri- oder Tetraester von Alkyldiphosphonsäuren und Alkoholen mit 1 bis 30 C-Atomen. Als Phosphorigsäureester sind beispielsweise geeignet Mono-, Di- oder Triester der Phosphorigen Säure und Alkoholen mit 1 bis 30 C-Atomen. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure, Octadecylphosphonsäure sowie deren Mono- und Dimethylester, -ethylester, -butylester, -ethylhexylester oder -phenylester, Butylphosphonsäuredibutylester, Phenylphosphonsäuredioctylester, Phosphonoameisensäuretriethylester, Phosphonoessigsäuretrimethylester, Phosphonoessigsäuretriethylester, 2-Phosphonopropionsäuretrimethylester, 2-Phosphonopropionsäuretriethylester, 2-Phosphonopropionsäuretripropylester, 2-Phosphonopropionsäuretributylester, 3-Phosphonopropionsäuretriethylester, 2-Phosphonobuttersäure-triethylester, 4-Phosphonocrotonsäuretriethylester, (12-Phosphonododecyl)-phosphonsäure, Phosphonoessigsäure, Phosphonoessigsäure-P,P-bis-(2,2,2-trifluorethyl)-methylester, Phosphonoessigsäure-P,P-diethyl-trimethylsilylester, Phosphonoessigsäure-P,P-dimethyl-tert.-butylester, Phosphonoessigsäure-P,P-dimethylester Kaliumsalz, Phosphonoessigsäure-P,P-dimethylethylester, 16-Phosphonohexadecansäure, 6-Phosphonohexansäure, N-(Phosphonomethyl)-glycin, N-(Phosphonomethyl)-glycin-monoisopropylaminsalz, N-(Phosphonomethyl)-iminodiessigsäure, (8-Phosphono-octyl)-phosphonsäure, 3-Phosphonopropionsäure, 11-Phosphonoundecansäure, Phosphonsäure-pinakolester, Trilaurylphosphit, Tris-(3-ethyloxethanyl-3-methyl)phosphit, Heptakis(dipropylenglykol)phosphit, Phosphorigsäure-bis-(diisopropylamid)-2-cyanethylester, Phosphorigsäure-bis-(diisopropylamid)-methylester, Phosphorigsäuredibutylester, Phosphorigsäure-(diethylamid)-dibenzylester, Phosphorigsäure-(diethylamid)-ditertiärbutylester, Phosphorigsäure-diethylester, Phosphorigsäure-(diisopropylamind)-diallylester, Phosphorigsäure-(diisopropylamid)-dibenzylester, Phosphorigsäure-(diisopropylamid)-di-tert.-butylester, Phosphorigsäure-(diisopropylamid)-dimethylester, Phosphorigsäure-(dimethylamid)-dibenzylester, Phosphorigsäuredimethylester, Phosphorigsäuredimethyl-trimethylsilylester, Phosphorigsäure-diphenylester, Phosphorigsäure-methylesterdichlorid, Phosphorigsäure-mono-(2-cyanethylester)-diisopropylamid-chlorid, Phosphorigsäure-(o-phenylen-ester)-chlorid, Phosphorigsäure-tributylester, Phosphorigsäure-triethylester, Phosphorigsäuretriisopropylester, Phosphorigsäure-triphenylester, Phosphorigsäure-tris-(tert.-butyl-dimethylsilyl)-ester, Phosphorigsäure-(tris-1,1,1,3,3,3-hexafluor-2-propyl)-ester, Phosphorigsäure-tris-(trimethylsilyl)-ester, Phosphorigsäure-dibenzylester. Unter Ester der Phosphorigen Säure werden auch die durch Propoxylierung der Phosphorigen Säure erhältlichen Produkte verstanden (bspw. erhältlich als Exolit® OP 550).

Als Komponente K geeignet sind auch Phosphinsäure, Phosphonigsäure und Phosphinigsäure sowie jeweils deren Ester. Als Phosphinsäureester sind beispielsweise geeignet Ester von Phosphinsäure, Alkylphosphinsäuren,

Dialkylphosphinsäuren oder Arylphosphinsäuren und Alkoholen mit 1 bis 30 C-Atomen. Als Phosphonigsäureester sind beispielsweise geeignet Mono- und Diester von Phosphonigsäure oder Arylphosphonigsäure und Alkoholen mit 1 bis 30 C-Atomen. Das beinhaltet beispielsweise Diphenylphosphinsäure oder 9,10-Dihydro-9-Oxa-10-Phosphaphenanthren-10-Oxid. Die als Komponente K geeigneten Ester der Phosphorsäure, Phosphonsäure, Phosphorigen Säure, Phosphinsäure, Phosphonigsäure oder Phosphinigsäure werden in der Regel durch Umsetzung von Phosphorsäure, Pyrophosphorsäure, Polyphosphorsäuren, Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren, Cyanphosphonsäure, Alkyldiphosphonsäuren, Phosphonigsäure, Phosphorige Säure, Phosphinsäure, Phosphinigsäure oder deren Halogenderivaten oder Phosphoroxiden mit Hydroxyverbindungen mit 1 bis 30 C-Atomen wie Methanol, Ethanol, Propanol, Butanol, Pentanol, Hexanol, Heptanol, Octanol, Nonanol, Dekanol, Dodekanol, Tridekanol, Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit erhalten.

Als Komponente K geeignete Phosphinoxide enthalten eine oder mehrere Alkyl-, Aryl oder Aralkylgruppen mit 1 - 30 C-Atomen, die an den Phosphor gebunden sind. Bevorzugte Phosphinoxide haben die allgemeine Formel $R_3P=O$ wobei R eine Alkyl-, Aryl oder Aralkylgruppe mit 1 - 20 C-Atomen ist. Geeignete Phosphinoxide sind beispielsweise Trimethylphosphinoxid, Tri(n-butyl)phosphinoxid, Tri(n-octyl)phosphinoxid, Triphenylphosphinoxid, Methyldibenzylphosphinoxid und deren Mischungen.

Des Weiteren sind als Komponente K geeignet Verbindungen des Phosphors, die durch Reaktion mit OH-funktionellen Verbindungen (wie bspw. Wasser oder Alkoholen) eine oder mehrere P-O-Bindung(en) ausbilden können. Beispielsweise kommen als solche Verbindungen des Phosphors in Frage Phosphor-(V)-sulfid, Phosphortribromid, Phosphortrichlorid und Phosphortriiodid. Es können auch beliebige Mischungen der vorgenannten Verbindungen als Komponente K eingesetzt werden. Besonders bevorzugt ist Komponente K Phosphorsäure.

DMC-Katalysatoren

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten. Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze. Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$M(X)_n$ (II)

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$M_r(X)_3$ (III)

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$M(X)_s$ (IV)

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$M(X)_t$ (V)

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,
Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$(Y)_a\ M'(CN)_b\ (A)_c$ (VI)

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyano-cobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

$M_X[M'_{X'}(CN)_y]_z$ (VII)

worin M wie in Formel (II) bis (V) und

M' wie in Formel (VI) definiert ist, und
x, x', y und z sind ganzzahlig und so gewählt, dass die Elektronenneutralität der Doppelmetallcyanidverbindung gegeben ist.
Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole,

Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt. Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt. Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischem Komplexliganden und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

## Beispiele

Die OH-Zahl (Hydroxylzahl) wurde gemäß DIN 53240-2 (November 2007) bestimmt.

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyethercarbonatpolyol (0,1 g) wurde auf der Rheometerplatte aufgebracht und bei 25°C einer Scherung von 0,01 bis 1000 1/s unterworfen und für 10 min alle 10 s die Viskosität gemessen. Angegeben ist die über alle Messpunkte gemittelte Viskosität.

Der Anteil an eingebautem $CO_2$ im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit dl: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:
cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (VIII) wie folgt berechnet, wobei folgende Abkürzungen verwendet werden: F(4,5) = Fläche der Resonanz bei 4,5 ppm für cyclisches Carbonat (entspricht einem H Atom) F(5,1-4,8) = Fläche der Resonanz bei 5,1-4,8 ppm für Polyethercarbonatpolyol und einem H-Atom
für cyclisches Carbonat.

F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{F(5{,}1-4{,}8)-F(4{,}5)}{F(5{,}1-4{,}8)+F(2{,}4)+0{,}33*F(1{,}2-1{,}0)} * 100 \qquad \text{(VIII)}$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8)-F(4{,}5)]*102}{N} * 100\% \qquad \text{(IX)}$$

wobei sich der Wert für N ("Nenner" N) nach Formel (X) berechnet:

$$N = [F(5{,}1-4{,}8)-F(4{,}5)]*102 + F(4{,}5)*102 + F(2{,}4)*58 + 0{,}33*F(1{,}2-1{,}0)*58 \qquad \text{(X)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.

Der Gewichtsanteil (in Gew.-%) an cyclischem Carbonat (CC') in der Reaktionsmischung wurde nach Formel (XI) berechnet,

$$CC' = \frac{F(4{,}5)*102}{N} * 100\% \qquad \text{(XI)}$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyether, welcher aus Propylenoxid während der ggf. unter $CO_2$-freien Bedingungen

stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.

Die Menge an gebildeten cyclischen Propylencarbonat wird über die Bilanzierung der in der Reaktionsmischung vorhandenen Gesamtmenge an cyclischem Propylencarbonat und der im Schritt (γ) zudosierten Menge an Propylencarbonat bestimmt. Die Gesamtmenge an cyclischen Propylencarbonat ergibt sich aus der quantitativen Abtrennung des cyclischen Propylencarbonats aus der Reaktionsmischung mittels zweistufiger thermischer Aufarbeitung (Fallfilmverdampfer und Stickstoff-Strippkolonne). Die gebildete Menge an Propylencarbonat wird dann über Rückrechnung mit der im Schritt (γ) zudosierten Propylencarbonatmenge bestimmt.

Einsatzstoffe:

PECP-1: Polyethercarbonatpolyol mit einer Funktionalität von 2,8, einer OH-Zahl von 56 mg KOH/g und einem $CO_2$-Gehalt von 20 Gew.-%
Glycerin: Fa. Aug. Hedinger GmbH & Co. KG
Propylenglykol: Fa. Aug. Hedinger GmbH & Co. KG
Antioxidans: Irganox® 1076, Handelsprodukt der Firma BASF SE.
Als DMC-Katalysator wurde bei allen Beispielen DMC-Katalysator hergestellt gemäß Beispiel 6 in WO 01/80994 A1 eingesetzt.

**Beispiel 1 (Vergleich): Herstellung von Polyethercarbonatpolyolen ohne kontinuierliche Dosierung von cyclischem Propylencarbonat (cPC)**

Schritt (α):

In einen kontinuierlich betriebenen 60 L Druckreaktor mit Gasdosierungseinrichtung und Produktaustragsrohr wurden 32,9 L PECP-1 enthaltend 200 ppm DMC-Katalysator vorgelegt.

Schritt (γ)

Bei einer Temperatur von 108°C und einem Gesamtdruck von 63,5 bar (absolut) wurden unter Rühren (11 Hz) folgende Komponenten mit den angegebenen Dosierraten dosiert:

- Propylenoxid mit 7,0 kg/h
- Kohlendioxid mit bis zu 2,5 kg/h, so dass der Druck von 63,5 bar konstant gehalten wird
- Mischung aus Glycerin/Propylenglykol (85 Gew.-% / 15 Gew.-%) enthaltend 0,69 Gew.-% (bezogen auf die Mischung aus Glycerin und Propylenglykol) DMC-Katalysator (nicht aktiviert) und 146 ppm (bezogen auf die Mischung aus Glycerin, Propylenglykol und DMC-Katalysator) $H_3PO_4$ (eingesetzt in Form einer 85%-igen wässrigen Lösung) mit 0,27 kg/h.

Die Reaktionsmischung wurde über das Produktaustragsrohr kontinuierlich aus dem Druckreaktor entnommen, so dass das Reaktionsvolumen (32,9 L) konstant gehalten wurde, wobei die mittlere Verweilzeit des Reaktionsgemischs im Druckreaktor 200 min betrug.

Schritt (δ):

Zur Vervollständigung der Reaktion wurde das entnommene Reaktionsgemisch in einen auf 119°C temperierten Nachreaktor (Rohrreaktor mit einem Reaktionsvolumen von 2,0 L) überführt. Die mittlere Verweilzeit des Reaktionsgemischs im Nachreaktor betrug 12 min. Das Produkt wurde anschließend auf Atmosphärendruck entspannt und dann mit 500 ppm Antioxidans versetzt.

Danach wurde zur Ermittlung der Selektivität (Verhältnis cyclisches / lineares Carbonat) vom Reaktionsgemisch

nach dem Nachreaktor eine Probe genommen und mittels $^1$H-NMR Analyse der Gehalt an cyclischem und linearem Carbonat bestimmt.

Anschließend wurde das Produkt mittels eines Wärmetauschers auf eine Temperatur von 120°C gebracht und unmittelbar darauf in einen 332 L Kessel überführt und für eine Verweilzeit von 4 Stunden bei der Temperatur von 115°C gehalten.

Nach Abschluss der Verweilzeit wurde das Produkt mit 40 ppm Phosphorsäure (Komponente K) versetzt.

Abschließend wurde das Produkt zur Abtrennung des cyclischen Propylencarbonats einer zweistufigen thermischen Aufarbeitung, nämlich in einer ersten Stufe mittels eines Fallfilmverdampfers gefolgt in einer zweiten Stufe von einer im Stickstoffgegenstrom betriebenen Strippkolonne unterworfen.

Der Fallfilmverdampfer wurde dabei bei einer Temperatur von 166°C und einem Druck von 8,7 mbar (absolut) betrieben. Der verwendete Fallfilmverdampfer bestand aus Glas mit einer Austauschfläche von 0,5 $m^2$. Der Apparat besaß ein von außen beheiztes Rohr mit einem Durchmesser von 115 mm und ca. 1500 mm Länge.

Die Stickstoff-Strippkolonne wurde bei einer Temperatur von 160°C, einem Druck von 80 mbar (absolut) und einer Stickstoff-Durchflussmenge von 0,6 kg $N_2$ / kg Produkt betrieben. Bei der verwendeten Strippkolonne handelte es sich um eine DN80 Glaskolonne mit 8 m Füllhöhe an Füllkörpern (Raschig Super-Ringe #0,3).

Von dem erhaltenen Polyethercarbonatpolyol wurden die OH-Zahl, die Viskosität und der Gehalt an eingebautem Kohlendioxid bestimmt. Die Ergebnisse sind in Tabelle 1 zusammengefasst.

**Beispiel 2: Herstellung von Polyethercarbonatpolyolen mit kontinuierlicher Dosierung von cyclischem Propylencarbonat (cPC)**

Schritt (α):

In einen kontinuierlich betriebenen 60 L Druckreaktor mit Gasdosierungseinrichtung und Produktaustragsrohr wurden 32,9 L PECP-1 enthaltend 200 ppm DMC-Katalysator vorgelegt.

Schritt (γ):

Bei einer Temperatur von 108°C und einem Gesamtdruck von 63,5 bar (absolut) wurden unter Rühren (11 Hz) folgende Komponenten mit den angegebenen Dosierraten dosiert:

- Propylenoxid mit 7,0 kg/h
- Kohlendioxid mit bis zu 2,5 kg/h, so dass der Druck von 63,5 bar konstant gehalten wird
- cyclisches Propylencarbonat (cPC) mit 0,68 kg/h (6,5 Gew.-%, bezogen auf die Summe der zudosierten Komponenten)
- Mischung aus Glycerin/Propylenglykol (85 Gew.-% / 15 Gew.-%) enthaltend 0,69 Gew.-% (bezogen auf die Mischung aus Glycerin und Propylenglykol) DMC-Katalysator (nicht aktiviert) und 146 ppm (bezogen auf die Mischung aus Glycerin, Propylenglykol und DMC-Katalysator) $H_3PO_4$ (eingesetzt in Form einer 85%-igen wässrigen Lösung) mit 0,27 kg/h.

Die Reaktionsmischung wurde über das Produktaustragsrohr kontinuierlich aus dem Druckreaktor entnommen, so dass das Reaktionsvolumen (32,9 L) konstant gehalten wurde, wobei die mittlere Verweilzeit des Reaktionsgemischs im Druckreaktor 200 min betrug.

Schritt (δ):

Zur Vervollständigung der Reaktion wurde das entnommene Reaktionsgemisch in einen auf 119°C temperierten Nachreaktor (Rohrreaktor mit einem Reaktionsvolumen von 2,0 L) überführt. Die mittlere Verweilzeit des Reaktionsgemischs im Nachreaktor betrug 12 min. Das Produkt wurde anschließend auf Atmosphärendruck entspannt und dann mit 500 ppm Antioxidans versetzt.

Danach wurde zur Ermittlung der Selektivität (Verhältnis cyclisches / lineares Carbonat) vom Reaktionsgemisch nach dem Nachreaktor eine Probe genommen und mittels $^1$H-NMR Analyse der Gehalt an cyclischem und linearem Carbonat bestimmt.

Anschließend wurde das Produkt mittels eines Wärmetauschers auf eine Temperatur von 120°C gebracht und unmittelbar darauf in einen 332 L Kessel überführt und für eine Verweilzeit von 4 Stunden bei der Temperatur von 115°C gehalten.

Nach Abschluss der Verweilzeit wurde das Produkt mit 40 ppm Phosphorsäure (Komponente K) versetzt.

Abschließend wurde das Produkt zur Abtrennung des cyclischen Propylencarbonats einer zweistufigen thermischen Aufarbeitung, nämlich in einer ersten Stufe mittels eines Fallfilmverdampfers gefolgt in einer zweiten Stufe von einer im Stickstoffgegenstrom betriebenen Strippkolonne unterworfen.

Der Fallfilmverdampfer wurde dabei bei einer Temperatur von 166°C und einem Druck von 8,7 mbar (absolut) betrieben. Der verwendete Fallfilmverdampfer bestand aus Glas mit einer Austauschfläche von 0,5 $m^2$. Der Apparat besaß ein von außen beheiztes Rohr mit einem Durchmesser von 115 mm und ca. 1500 mm Länge.

Die Stickstoff-Strippkolonne wurde bei einer Temperatur von 160°C, einem Druck von 80 mbar (absolut) und einer Stickstoff-Durchflussmenge von 0,6 kg $N_2$ / kg Produkt betrieben. Bei der verwendeten Strippkolonne handelte es sich um eine DN80 Glaskolonne mit 8 m Füllhöhe an Füllkörpern (Raschig Super-Ringe #0,3).

Von dem erhaltenen Polyethercarbonatpolyol wurden die OH-Zahl, die Viskosität und der Gehalt an eingebautem Kohlendioxid bestimmt. Die Ergebnisse sind in Tabelle 1 zusammengefasst.

**Beispiel 3: Herstellung von Polyethercarbonatpolyolen mit kontinuierlicher Dosierung von cyclischem Propylencarbonat (cPC)**

Schritt ($\alpha$):

In einen kontinuierlich betriebenen 60 L Druckreaktor mit Gasdosierungseinrichtung und Produktaustragsrohr wurden 32,9 L PECP-1 enthaltend 200 ppm DMC-Katalysator vorgelegt.

Schritt ($\gamma$):

Bei einer Temperatur von 108°C und einem Gesamtdruck von 63,5 bar (absolut) wurden unter Rühren (11 Hz) folgende Komponenten mit den angegebenen Dosierraten dosiert:

- Propylenoxid mit 7,0 kg/h
- Kohlendioxid mit bis zu 2,5 kg/h, so dass der Druck von 63,5 bar konstant gehalten wird
- cyclisches Propylencarbonat (cPC) mit 0,98 kg/h (9,1 Gew.-%, bezogen auf die Summe der zudosierten Komponenten)
- Mischung aus Glycerin/Propylenglykol (85 Gew.-% / 15 Gew.-%) enthaltend 0,69 Gew.-% (bezogen auf die Mischung aus Glycerin und Propylenglykol) DMC-Katalysator (nicht aktiviert) und 146 ppm (bezogen auf die Mischung aus Glycerin, Propylenglykol und DMC-Katalysator) $H_3PO_4$ (eingesetzt in Form einer 85%-igen wässrigen Lösung) mit 0,27 kg/h.

Die Reaktionsmischung wurde über das Produktaustragsrohr kontinuierlich aus dem Druckreaktor entnommen, so dass das Reaktionsvolumen (32,9 L) konstant gehalten wurde, wobei die mittlere Verweilzeit des Reaktionsgemischs im Druckreaktor 200 min betrug.

Schritt ($\delta$):

Zur Vervollständigung der Reaktion wurde das entnommene Reaktionsgemisch in einen auf 119°C temperierten Nachreaktor (Rohrreaktor mit einem Reaktionsvolumen von 2,0 L) überführt. Die mittlere Verweilzeit des Reaktionsgemischs im Nachreaktor betrug 12 min. Das Produkt wurde anschließend auf Atmosphärendruck entspannt und dann mit 500 ppm Antioxidans versetzt.

Danach wurde zur Ermittlung der Selektivität (Verhältnis cyclisches / lineares Carbonat) vom Reaktionsgemisch nach dem Nachreaktor eine Probe genommen und mittels $^1$H-NMR Analyse der Gehalt an cyclischem und linearem Carbonat bestimmt.

Anschließend wurde das Produkt mittels eines Wärmetauschers auf eine Temperatur von 120°C gebracht und unmittelbar darauf in einen 332 L Kessel überführt und für eine Verweilzeit von 4 Stunden bei der Temperatur von 115°C gehalten.

Nach Abschluss der Verweilzeit wurde das Produkt mit 40 ppm Phosphorsäure (Komponente K) versetzt.

Abschließend wurde das Produkt zur Abtrennung des cyclischen Propylencarbonats einer zweistufigen thermischen Aufarbeitung, nämlich in einer ersten Stufe mittels eines Fallfilmverdampfers gefolgt in einer zweiten Stufe von einer im Stickstoffgegenstrom betriebenen Strippkolonne unterworfen.

Der Fallfilmverdampfer wurde dabei bei einer Temperatur von 166°C und einem Druck von 8,7 mbar (absolut) betrieben. Der verwendete Fallfilmverdampfer bestand aus Glas mit einer Austauschfläche von 0,5 $m^2$. Der Apparat besaß ein von außen beheiztes Rohr mit einem Durchmesser von 115 mm und ca. 1500 mm Länge.

Die Stickstoff-Strippkolonne wurde bei einer Temperatur von 160°C, einem Druck von 80 mbar (absolut) und einer Stickstoff-Durchflussmenge von 0,6 kg $N_2$ / kg Produkt betrieben. Bei der verwendeten Strippkolonne handelte es

sich um eine DN80 Glaskolonne mit 8 m Füllhöhe an Füllkörpern (Raschig Super-Ringe #0,3).

Von dem erhaltenen Polyethercarbonatpolyol wurden die OH-Zahl, die Viskosität und der Gehalt an eingebautem Kohlendioxid bestimmt. Die Ergebnisse sind in Tabelle 1 zusammengefasst.

Tabelle 1: Ergebnisse der Polyethercarbonatpolyol-Herstellung

| Beispiel | Dosierung cPC [kg/h] | Selektivität [cyclisches / lineares Carbonat] | Eingebautes $CO_2$ [Gew.-%] | OH-Zahl [mg KOH/g] | Viskosität 25°C [mPas] |
|---|---|---|---|---|---|
| 1 * | -- | 0,171 | 20,0 | 57,5 | 17350 |
| 2 | 0,68 | 0,140 | 19,5 | 57,7 | 15250 |
| 3 | 0,98 | 0,136 | 19,2 | 58,0 | 14200 |
| * Vergleichsbeispiel | | | | | |

Die Ergebnisse aus Tabelle 1 belegen, dass durch das erfindungsgemäße Verfahren Polyethercarbonatpolyole mit hohen Anteilen an eingebautem $CO_2$ erhalten werden und im Vergleich mit Vergleichsbeispiel 1 die Selektivität verbessert wird.

## Patentansprüche

1. Verfahren zur Herstellung von Polyethercarbonatpolyolen durch Anlagerung von Alkylenoxid und Kohlendioxid an eine H-funktionelle Startersubstanz, **dadurch gekennzeichnet, dass**

   ($\alpha$) eine Teilmenge H-funktioneller Startersubstanz in einem Reaktor gegebenenfalls gemeinsam mit DMC-Katalysator vorgelegt wird,
   ($\gamma$) eine H-funktionelle Startersubstanz und ein Suspensionsmittel, das keine H-funktionelle Gruppen aufweist, während der Reaktion kontinuierlich in den Reaktor zudosiert werden.

2. Verfahren gemäß Anspruch 1, **dadurch gekennzeichnet, dass**
   ($\delta$) das Reaktionsgemisch in Schritt ($\gamma$) in einen Nachreaktor überführt wird, in dem im Wege einer Nachreaktion der Gehalt an freiem Alkylenoxid im Reaktionsgemisch reduziert wird.

3. Verfahren gemäß einem der Ansprüche 1 oder 2, **dadurch gekennzeichnet, dass** in Schritt ($\gamma$) 2 Gew.-% bis 20 Gew.-% des Suspensionsmittels, das keine H-funktionelle Gruppen aufweist, zudosiert wird, bezogen auf die Summe der in Schritt ($\gamma$) zudosierten Komponenten.

4. Verfahren gemäß einem der Ansprüche 1 bis 3, **dadurch gekennzeichnet, dass** in Schritt ($\gamma$) als Suspensionsmittel, das keine H-funktionelle Gruppen aufweist, mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-*tert*-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetrachlorkohlenstoff eingesetzt wird.

5. Verfahren gemäß einem der Ansprüche 1 bis 4, **dadurch gekennzeichnet, dass** in Schritt ($\gamma$) als Suspensionsmittel, das keine H-funktionelle Gruppen aufweist, 4-Methyl-2-oxo-1,3-dioxolan und 1,3-Dioxolan-2-on oder eine Mischung aus 4-Methyl-2-oxo-1,3-dioxolan und 1,3-Dioxolan-2-on eingesetzt wird.

6. Verfahren gemäß einem der Ansprüche 1 bis 5, **dadurch gekennzeichnet, dass** die H-funktionelle Startersubstanz ausgewählt ist aus mindestens einer Verbindung der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

7. Verfahren gemäß einem der Ansprüche 1 bis 6, **dadurch gekennzeichnet, dass** in Schritt ($\alpha$) die H-funktionelle

Startersubstanz ausgewählt ist aus mindestens einer Verbindung der Gruppe bestehend aus Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

8. Verfahren gemäß einem der Ansprüche 1 bis 7, **dadurch gekennzeichnet, dass** die H-funktionelle Startersubstanz in Schritt (γ) ausgewählt ist aus mindestens einer Verbindung der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol.

9. Verfahren gemäß einem der Ansprüche 1 bis 8, **dadurch gekennzeichnet, dass** das aus Schritt (γ) resultierende Reaktionsgemisch kontinuierlich aus dem Reaktor entfernt wird.

10. Verfahren gemäß einem der Ansprüche 1 bis 9, **dadurch gekennzeichnet, dass** die Anlagerung in Gegenwart eines Metallkomplexkatalysators auf Basis der Metalle Zink und/oder Cobalt erfolgt.

11. Verfahren gemäß einem der Ansprüche 1 bis 9, **dadurch gekennzeichnet, dass** die Anlagerung in Gegenwart eines DMC-Katalysators erfolgt.

12. Verfahren gemäß Anspruch 11, **dadurch gekennzeichnet, dass** in Schritt (γ) DMC-Katalysator kontinuierlich in den Reaktor dosiert wird.

13. Verfahren gemäß Anspruch 12, **dadurch gekennzeichnet, dass** der DMC-Katalysator in H-funktioneller Startersubstanz suspendiert kontinuierlich zugegeben wird.

## Claims

1. Process for preparing polyethercarbonate polyols by adding alkylene oxide and carbon dioxide onto an H-functional starter substance, **characterized in that**

   (α) a reactor is initially charged with a portion of H-functional starter substance, optionally together with DMC catalyst,
   (γ) an H-functional starter substance and a suspension medium having no H-functional groups are metered continuously into the reactor during the reaction.

2. Process according to Claim 1, **characterized in that**
   (δ) the reaction mixture in step (γ) is transferred into a postreactor in which, by way of a postreaction, the content of free alkylene oxide in the reaction mixture is reduced.

3. Process according to either of Claims 1 and 2, **characterized in that**, in step (γ), 2% by weight to 20% by weight of the suspension medium having no H-functional groups is metered in, based on the sum total of the components metered in in step (γ).

4. Process according to any of Claims 1 to 3, **characterized in that** the suspension medium having no H-functional groups which is used in step (γ) is at least one compound selected from the group consisting of 4-methyl-2-oxo-1,3-dioxolane, 1,3-dioxolan-2-one, acetone, methyl ethyl ketone, acetonitrile, nitromethane, dimethyl sulfoxide, sulfolane, dimethylformamide, dimethylacetamide, N-methylpyrrolidone, dioxane, diethyl ether, methyl tert-butyl ether, tetrahydrofuran, ethyl acetate, butyl acetate, pentane, n-hexane, benzene, toluene, xylene, ethylbenzene, chloroform, chlorobenzene, dichlorobenzene and carbon tetrachloride.

5. Process according to any of Claims 1 to 4, **characterized in that** the suspension medium having no H-functional groups which is used in step (γ) is 4-methyl-2-oxo-1,3-dioxolane and 1,3-dioxolan-2-one or a mixture of 4-methyl-2-oxo-1,3-dioxolane and 1,3-dioxolan-2-one.

6. Process according to any of Claims 1 to 5, **characterized in that** the H-functional starter substance is selected from at least one compound of the group consisting of ethylene glycol, propylene glycol, propane-1,3-diol, butane-1,3-diol, butane-1,4-diol, pentane-1,5-diol, 2-methylpropane-1,3-diol, neopentyl glycol, hexane-1,6-diol, octane-1,8-diol,

diethylene glycol, dipropylene glycol, glycerol, trimethylolpropane, pentaerythritol, sorbitol, polyethercarbonate polyols having a molecular weight $M_n$ in the range from 150 to 8000 g/mol with a functionality of 2 to 3, and polyether polyols having a molecular weight $M_n$ in the range from 150 to 8000 g/mol with a functionality of 2 to 3.

7. Process according to any of Claims 1 to 6, **characterized in that**, in step (α), the H-functional starter substance is selected from at least one compound of the group consisting of polyethercarbonate polyols having a molecular weight $M_n$ in the range from 150 to 8000 g/mol with a functionality of 2 to 3, and polyether polyols having a molecular weight $M_n$ in the range from 150 to 8000 g/mol with a functionality of 2 to 3.

8. Process according to any of Claims 1 to 7, **characterized in that** the H-functional starter substance in step (γ) is selected from at least one compound of the group consisting of ethylene glycol, propylene glycol, propane-1,3-diol, butane-1,3-diol, butane-1,4-diol, pentane-1,5-diol, 2-methylpropane-1,3-diol, neopentyl glycol, hexane-1,6-diol, octane-1,8-diol, diethylene glycol, dipropylene glycol, glycerol, trimethylolpropane, pentaerythritol and sorbitol.

9. Process according to any of Claims 1 to 8, **characterized in that** the reaction mixture resulting from step (γ) is removed continuously from the reactor.

10. Process according to any of Claims 1 to 9, **characterized in that** the addition is effected in the presence of a metal complex catalyst based on the metals zinc and/or cobalt.

11. Process according to any of Claims 1 to 9, **characterized in that** the addition is effected in the presence of a DMC catalyst.

12. Process according to Claim 11, **characterized in that**, in step (γ), DMC catalyst is metered continuously into the reactor.

13. Process according to Claim 12, **characterized in that** the DMC catalyst is added continuously suspended in H-functional starter substance.

## Revendications

1. Procédé pour la préparation de polyéthercarbonatepolyols par addition d'oxyde d'alkylène et de dioxyde de carbone sur une substance de départ fonctionnalisée par H, **caractérisé en ce que**

   (α) une quantité partielle de substance de départ fonctionnalisée par H est placée dans un réacteur éventuellement avec un catalyseur de type DMC,
   (γ) une substance de départ fonctionnalisée par H et un agent de suspension qui ne présente aucun groupe fonctionnalisé par H, est ajoutée de manière continue dans le réacteur pendant la réaction.

2. Procédé selon la revendication 1, **caractérisé en ce que**
   (δ) le mélange réactionnel dans l'étape (γ) est transféré dans un post-réacteur dans lequel par le biais d'une post-réaction la teneur en oxyde d'alkylène libre dans le mélange réactionnel est réduite.

3. Procédé selon l'une quelconque des revendications 1 et 2, **caractérisé en ce que** dans l'étape (γ) 2 % en poids à 20 % en poids de l'agent de suspension, qui ne présente aucun groupe fonctionnalisé par H, sont ajoutés, par rapport à la somme des composants ajoutés dans l'étape (γ).

4. Procédé selon l'une quelconque des revendications 1 à 3, **caractérisé en ce que** dans l'étape (γ), au moins un composé choisi dans le groupe constitué par le 4-méthyl-2-oxo-1,3-dioxolanne, la 1,3-dioxolanne-2-one, l'acétone, la méthyléthylcétone, l'acétonitrile, le nitrométhane, le diméthylsulfoxyde, le sulfolane, le diméthylformamide, le diméthylacétamide, la N-méthylpyrrolidone, le dioxanne, le diéthyléther, le méthyl-tert-butyléther, le tétrahydrofuranne, l'acétate d'éthyle, l'acétate de butyle, le pentane, le n-hexane, le benzène, le toluène, un xylène, l'éthylbenzène, le chloroforme, le chlorobenzène, un dichlorobenzène et un tétrachlorure de carbone est utilisé en tant qu'agent de suspension qui ne présente aucun groupe fonctionnalisé par H.

5. Procédé selon l'une quelconque des revendications 1 à 4, **caractérisé en ce que** dans l'étape (γ), le 4-méthyl-2-oxo-1,3-dioxolanne et la 1,3-dioxolanne-2-one ou un mélange de 4-méthyl-2-oxo-1,3-dioxolanne et de 1,3-dioxolanne-2-one est/sont utilisé(s) en tant qu'agent de suspension qui ne présente aucun groupe fonctionnalisé par H.

6. Procédé selon l'une quelconque des revendications 1 à 5, **caractérisé en ce que** la substance de départ fonctionnalisée par H est choisie parmi au moins un composé du groupe constitué par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, la glycérine, le triméthylolpropane, le pentaérythritol, le sorbitol, des polyéthercarbonatepolyols dotés d'un poids moléculaire $M_n$ dans la plage de 150 à 8 000 g/mole à une fonctionnalité de 2 à 3 et des polyétherpolyols dotés d'un poids moléculaire $M_n$ dans la plage de 150 à 8 000 g/mole et d'une fonctionnalité de 2 à 3.

7. Procédé selon l'une quelconque des revendications 1 à 6, **caractérisé en ce que** dans l'étape ($\alpha$), la substance de départ fonctionnalisée par H est choisie parmi au moins un composé du groupe constitué par des polyéthercarbonatepolyols dotés d'un poids moléculaire $M_n$ dans la plage de 150 à 8 000 g/mole à une fonctionnalité de 2 à 3 et des polyétherpolyols dotés d'un poids moléculaire $M_n$ dans la plage de 150 à 8 000 g/mole et d'une fonctionnalité de 2 à 3.

8. Procédé selon l'une quelconque des revendications 1 à 7, **caractérisé en ce que** la substance de départ fonctionnalisée par H dans l'étape ($\gamma$) est choisie parmi au moins un composé du groupe constitué par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, la glycérine, le triméthylolpropane, le pentaérythritol et le sorbitol.

9. Procédé selon l'une quelconque des revendications 1 à 8, **caractérisé en ce que** le mélange réactionnel résultant de l'étape ($\gamma$) est évacué du réacteur de manière continue.

10. Procédé selon l'une quelconque des revendications 1 à 9, **caractérisé en ce que** l'addition est réalisée en présence d'un catalyseur de type complexe métallique à base des métaux zinc et/ou cobalt.

11. Procédé selon l'une quelconque des revendications 1 à 9, **caractérisé en ce que** l'addition est réalisée en présence d'un catalyseur de type DMC.

12. Procédé selon la revendication 11, **caractérisé en ce que** dans l'étape ($\gamma$), le catalyseur de type DMC est ajouté de manière continue dans le réacteur.

13. Procédé selon la revendication 12, **caractérisé en ce que** le catalyseur de type DMC, mis en suspension dans la substance de départ fonctionnalisée par H, est ajouté de manière continue.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3060596 B1
- WO 2014033071 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** Angew. Chem. 2009, vol. 48, 931